Europäisches Patentamt

European Patent Office

Office européen des brevets

(19)

(11) Publication number: **0 130 809 B1**

# EUROPEAN PATENT SPECIFICATION

(45) Date of publication of patent specification: **23.10.91**   (51) Int. Cl.⁵: **C01B 33/34, B01J 29/28**

(21) Application number: **84304434.8**

(22) Date of filing: **28.06.84**

(54) **Method of preparing highly siliceous porous crystalline zeolites.**

(30) Priority: **30.06.83 US 509671**

(43) Date of publication of application:
**09.01.85 Bulletin 85/02**

(45) Publication of the grant of the patent:
**23.10.91 Bulletin 91/43**

(84) Designated Contracting States:
**BE DE FR GB IT NL SE**

(56) References cited:
**EP-A- 0 002 900**
**EP-A- 0 030 751**
**EP-A- 0 077 624**
**DE-A- 2 909 929**
**US-A- 4 151 189**

(73) Proprietor: **MOBIL OIL CORPORATION**
**3225 Gallows Road**
**Fairfax, Virginia 22037-0001(US)**

(72) Inventor: **Chu, Pochen**
**1173 Ollerton Road**
**West Deptford N.J. 08066(US)**
Inventor: **Dwyer, Francis Gerard**
**1128 Talleyrand Road**
**West Chester Pa. 19380(US)**

(74) Representative: **Jones, Alan John et al**
**CARPMAELS & RANSFORD 43 Bloomsbury**
**Square**
**London, WC1A 2RA(GB)**

**Description**

This invention relates to a novel method of preparing highly siliceous porous crystalline materials. More particularly, this invention relates to a method of preraring low alkali metal ZSM-5 type zeolites from a high solids forming mixture containing sources of silica, alkali metal, organic nitrogen cations and water, wherein amorphous precipitated silica is used as a source of silica in the zeolite forming mixture and alkylamines or alkyldiamines are used as the source of organic nitrogen cations.

Zeolitic materials, both natural and synthetic, have been demonstrated in the past to have catalytic properties for various types of hydrocarbon conversion. Certain zeolitic materials are ordered, porous crystalline aluminosilicates having a definite crystalline structure as determined by X-ray diffraction, within which there are a large number of smaller cavities which may be interconnected by a number of still smaller channels or pores. These cavities and pores are uniform in size within a specific zeolitic material. Since the dimensions of these pores are such as to accept for adsorption molecules of certain dimensions while rejecting those of larger dimensions, these materials have come to be known as "molecular sieves" and are utilized in a variety of ways to take advantage of these properties.

Conventional methods for synthesizing porous crystalline zeolites have involved the preparation of a forming mixture from which the synthetic zeolite material can be crystallized. For example zeolites have been conventionally prepared from a hydrogel. Generally, silicate and aluminate solutions are mixed together, along with sources of alkali metal and quaternary nitrogen or phosphonium cations, to form a silicate hydrogel mixture which is subsequently hydrothermally crystallized to form the desired zeolite. Detailed descriptions of such conventional methods of preparing zeolites are disclosed in U.S. Patent Nos. 3,702,886, 3,709,979, 4,088,605 and 4,148,713.

Various types of silica have been used as silica sources in zeolite reaction mixtures in prior art zeolite synthesis methods. Such sources include silica gel, silica hydrosol, fumed silica, aluminosilicate clays, alkali metal silicates, colloidal silica, and precipitated silicas. U.S. Patent No. 4,275,047 to Whittam, for example, discloses a method of preparing ZSM-5 utilizing precipitated silica as the silica source.

In the preparation of highly siliceous zeolites such as those having silica/alumina ratios of at least 12, silica is the major component in the reaction mixture. The properties of the silica source including its particle size, solubility and reactivity may have an important effect on the characteristics of the zeolite produced. Conventional forming mixtures for producing highly siliceous zeolites which utilize conventional silica sources such as alkali metal silicates or colloidal silica are limited with respect to their ultimate post-crystallization solids, i.e. zeolite, content. Conventional formulations of zeolite crystallizing media also generally become highly viscous as the silica source is added and are subject to gelation which interferes with agitation of the forming mixture as well as crystallization at solid levels greater than about 10%.

Just as selection of silica source can affect the nature of the zeolite product produced, the type of template or directing agent, e.g., organic nitrogen cations, in the zeolite forming mixture can influence the properties of zeolites synthesized from the mixture. It is known, for example, from British Patent Specification No. 1,365,318 that alkyl amines can be used as templates for zeolite synthesis, and it is also known from U.S. Patent 4,151,189 that primary amines in particular are especially useful for promoting synthesis of zeolites containing especially low amounts of alkali metal. Likewise, U.S. Patent 4,139,600 teaches that alkyl diamines can be employed as directing agents in the synthesis of low alkali metal, e.g., low sodium zeolites.

If alkyl amines or alkyl diamines are employed as directing agents in the synthesis of synthetic zeolites, use of conventional silica sources, e.g., sodium silicate, in the zeolite forming mixture can result in some difficulties in preparing zeolites of certain desired characteristics. When using conventional silica sources in combination with amine or diamine templates, it can be troublesome, for instance, to prepare zeolites of very small crystallite size, e.g., crystals of a size less than about 0.05 microns. The object of the present invention is to provide an improved method for synthesis of certain types of siliceous porous crystalline zeolites using a selected combination of a specific type of organic nitrogen directing agent and a specific type of silica source.

In particular the present invention is directed to an improved method for preparing siliceous porous crystalline zeolites whereby an aqueous forming mixture containing sources of silica, alkali metal cations and organic nitrogen cations is prepared and is thereafter maintained under crystallization conditions. The improvement in such a method comprises the utilization as a silica source of an amorphous precipitated silica to thereby provide a non-gelling forming mixture having a solids content greater than about 15 percent by weight and the utilization as a source of at least a portion of the organic nitrogen cations of an amine selected from certain monoamines and/or diamines. Such monoamines can have the formula $R_1R_2R_3N$ wherein $R_1$ is lower alkyl of 2 to 8 carbon atoms and $R_2$ and $R_3$ are each hydrogen or lower alkyl of 2 to 8 carbon atoms. Operable alkyl diamines are those wherein the alkyl group contains from 2 to 20 carbon atoms. The improved zeolite synthesis method of the present invention serves to form siliceous zeolite crystals having an $SiO_2/Al_2O_3$ molar ratio of at least 12 and a constraint index of from 1 to 12.

As noted, one essential element of the present invention is the use of an amorphous precipitated silica as the silica source in a zeolite forming mixture. Such an amorphous precipitated silica can be a synthetic wet-process, hydrated amorphous silica which preferably has a particle size range of from about 0.01 to 100 micrometres. More preferably, these silica particles are of a spherical shape with an average diameter of about 0.02 micrometres. Such particles tend to agglomerate in loose "grape cluster" structures. The precipitated silicas used in the present invention generally have an unusually large surface area, e.g., a surface area which preferably ranges from about 140 to 160 square meters per gram. Hi-Sil™, a product of PPG Industries Chemical Division, FK-320™, available from Degussa Corporation, QUSO™ from PQ Corporation, and ZEOFREE-80™ manufactured by J.M. Huber Corporation, have all been found suitable as the amorphous precipitated silica to be used in the present invention.

Use of an amorphous precipitated silica as the silica source in the preparation of highly siliceous zeolites results in several important advantages. The zeolite forming mixture employed in the present method is significantly higher in solids content than conventional forming mixtures which employ sodium silicate as the silica source. Conventional forming mixtures having a solids content of greater than about 10% by weight are subject to excessive gelation which results in the formation of a hard gel which inhibits zeolite crystallization. Consequently conventional forming mixtures are generally limited to solids levels of about 10% by weight. The particular high-solids formulations of the present invention, on the other hand, contain 15%, or as much as 25% or even 40% solids or even more without any gel formation. This is especially true if the forming mixture, or the silica-containing portion of it, is maintained throughout crystallization at a pH of 10.0 or less, preferably 9.0 or less.

The high solids content of the forming mixture permits complete reaction of the zeolite forming components. This can provide an increase in zeolite yield of up to about 300%, over conventional preparations from hydrogel reaction mixtures without significantly increasing operating costs per pound of zeolite catalyst produced.

The improved method of the present invention furthermore permits the use of a wide range of forming mixture agitation conditions resulting in greater flexibility in the control of crystal size of the zeolite product. Such improvement is probably the result of improved mass transfer due to the more fluid rheology of the reaction mixture. Control of the product crystal size permits the production of zeolites of reduced crystal size, say, e.g., .02 to .05 microns which exhibit improved activity over conventionally synthesized zeolites which are of generally larger crystal size. The use of a solid precipitated silica source is also believed to contribute a seeding effect to crystal formation. All of these factors result in a reduction of crystallization time which can result in a product of higher purity.

The second essential element of the present invention involves the utilization of $C_2$-$C_8$ alkyl amines or $C_2$-$C_{20}$ alkyl diamines as the organic nitrogen template or directing agent in the zeolite forming mixture. As noted hereinbefore, amine and diamine materials of this type have been disclosed in British Patent Specification No. 1,365,318; U.S. Patent 4,151,189 and U.S. Patent 4,139,600. Primary amines and diamines are especially useful in promoting synthesis of zeolites having a very low percentage, e.g., less than about 0.14 percent by weight, and frequently less that about 0.1 percent by weight of alkaki metal, e.g., sodium, in the as-synthesized form.

Examples of suitable alkyl amine templates include triethylamine, tripropylamine, tributylamine, diethylamine, monoethylamine, n-propylamine and n-butylamine, with n-propylamine being especially preferred. Examples of suitable alkyl diamine templates include ethylenediamine, propylenediamine, pentamethylenediamine and hexamethylenediamine, with hexamethylenediamine being especially preferred.

It should be noted that the terms "amine and "diamine" as used herein are meant to include amine and diamine salts as well as amines and diamines per se. Materials in any form which provide mono, di or trialkyl substituted nitrogen moieties in the forming mixture are, for purposes of the present invention, considered to be amines or diamines.

It should also be noted that the improved synthesis method of the present invention can be carried out using a source of conventional tetraalkyl-substituted quaternary ammonium or quaternary phosphonium cations in the forming mixture in addition to the alkyl amine or alkyl diamine. As noted in South African Patent Application No. 83/8250, mixtures of tetraalkyl-substituted quaternary ammonium and amine templates can, in fact, be especially useful for the production of ZSM-5 and ZSM-11. Whether or not tetraalkyl-substituted quaternary nitrogen species are also present, the important feature of the instant invention is that at least a portion of the organic nitrogen cations in the zeolite forming mixture must be derived from one or more of the alkyl amines or alkyl diamines hereinbefore described. The forming mixture employed in the present invention can be substantially free of alkyl halides.

As noted hereinbefore, it is the combination of the use of an amorphous precipitated silica in a high solids forming mixture and the use of an alkyl amine or alkyl diamine template which provides an especially desirable method for producing low alkali metal zeolites, and especially low sodium ZSM-5. Because conventional silica sources generally produce low sodium crystals ranging from about 0.1 to 5 micronmetres, which are subject to greater aging and reduced activity, the method of the present invention is of particular value in obtaining low sodium ZSM-5 of small crystal size, e.g. crystallites ranging from about 0.01 to 0.08 microns, preferably about 0.01 to 0.05 micronmetres.

The combination of an amorphous precipitated silica as a silica source and an amine or diamine template is employed in otherwise conventional zeolite forming mixtures which essentially contain water and a source of alkali metal, e.g., sodium hydroxide. The forming mixture can also contain optional ingredients such as sources of supplemental organic nitrogeneous cation templating agents, surfactants, soluble aluminum compounds, e.g., alum $[Al_2(SO_4)_3]$ as well as seeds of the particular zeolite desired as product. Each of the components of the forming mixture are employed in amounts which provide suitable ratios of $SiO_2$, $Al_2O_3$, $RN^+$, $M^+$, $OH^-$ and $H_2O$ ($RN^+$ = organic nitrogen, $M^+$ = alkali metal) depending on the structure of the zeolite desired. For any given desired zeolite structure, the ratios of aforementioned oxides and ions in the forming mixture are those conventionally employed in known synthesis methods for that particular zeolite.

In a preferred method of preparing the zeolite forming mixture, the forming mixture components are combined in such a way that the pH of the forming mixture, or the silica-containing portion thereof, does not exceed 10. Thus, for example, the alkali metal source, e.g., sodium hydroxide, can be premixed with the organic nitrogen material or with the solution containing soluble aluminum compounds, e.g., alum, before combining this premixture with the amorphous precipitated silica. In this manner, exceedingly high pH conditions in the silica-containing forming mixture are avoided, and accordingly the tendency of the high solids forming mixture to gel is reduced.

The forming mixture of the present invention is maintained under crystallization conditions until formation of the desired siliceous porous crystalline zeolite is obtained. For example, crystallization according to the methods of the present invention can be effected in a single stage by heating the forming mixture to a temperature of about 60 to 200°C (140 to 392°F) and holding there until a product having a crystallinity of about 30 to 100% is obtained. Optionally, the crystallization may be carried out in two stages. In the first stage, a product of about 30 to 70% crystallinity is obtained after about 2 to 100 hours, at temperatures ranging from about 60 to 100°C (140 to 212°F). The first stage product is then treated at higher temperatures of about 100 to 200°C (212 to 392°F) for a shorter period of about 1 to 20 hours to produce a product having anywhere from about 50 to 100% crystallinity.

Zeolites produced by the method of the present invention may have a silica to alumina ratio ranging from about 12 to infinity. Highly siliceous zeolites of the present invention have a silica to alumina ratio ranging from about 40 to greater than 200. Zeolites of generally lower silica to alumina ratios, say, less than about 70, are made from solutions containing soluble aluminum compounds such as alum. Zeolites of higher silica to alumina ratio (e.g., greater than about 70) of the present invention can be made from caustic forming solutions containing NaOH, water, amorphous precipitated silica, and no intentionally added aluminum.

The siliceous zeolite crystals produced by the method of the present invention also exhibit constrained access to and egress from their intercrystalline free space inasmuch as they have a constraint index of from 1 to 12. Such zeolite materials which have a silica to alumina molar ratio of at least 12 and a constraint index within the range of 1 to 12 are well known. Such zeolites and their use as catalysts for the conversion of organic compounds are generally described, for example, in U.S. Patent No. 4,326,994. Crystalline zeoltes of the preferred type prepared in accordance with the method of the present invention include those having the structure of zeolite beta, ZSM-5, ZSM-5/ZSM-11 intermediate, ZSM-11, ZSM-12, ZSM-23, ZSM-35, ZSM-38, and ZSM-48, with ZSM-5 being particularly preferred.

Zeolite beta is described in greater detail in U.S. Patent Nos. 3,308,069 and RE 28,341, which patents disclose in particular the X-ray diffraction pattern of and a synthesis method for zeolite beta.

ZSM-5 is described in greater detail in U.S. Patent Nos. 3,702,886 and RE 29,948, which patents provide the X-ray diffraction pattern of and a synthesis method for the therein disclosed ZSM-5.

ZSM-11 is described in U.S. Patent No. 3,709,979, which discloses in particular the X-ray diffraction pattern of and a synthesis method for ZSM-11.

ZSM-5/ZSM-11 intermediate is described in U.S. Patent No. 4,229,424, which discloses in particular the X-ray diffraction pattern of and a synthesis method for ZSM-5/ZSM-11 intermediate.

ZSM-12 is described in U.S. Patent No. 3,832,449, which discloses in particular the X-ray diffraction pattern of and a synthesis method for ZSM-12.

ZSM-23 is described in U.S. Patent No. 4,076,842, which discloses in particular the X-ray diffraction pattern of and a synthesis method for ZSM-23.

ZSM-35 is described in U.S. Patent No. 4,016,245, which discloses in particular the X-ray diffraction pattern of and a synthesis method for ZSM-35.

ZSM-38 is described in U.S. Patent No. 4,046,859, which discloses in particular the X-ray diffraction pattern of and a synthesis method for ZSM-38.

ZSM-48 is described in U.S. Patent No. 4,375,573, which discloses in particular the X-ray diffraction pattern of and a synthesis method for ZSM-48.

The siliceous porous crystalline zeolites prepared by the method of the present invention are useful as catalysts to promote catalytic conversion of organic compounds, e.g., hydrocarbons and/or oxygenates. Prior to catalytic use of the zeolite crystals produced by this invention, it is desirable to calcine the crystals at temperatures of at least 250° C in order to remove organic nitrogen cations from the zeolite. For catalytic purposes, the zeolite crystals prepared in accordance with the present invention can also be combined in known manner with metals of Groups IB to VIII of the Periodic Table, including, by way of example, nickel, copper, zinc, palladium, platinum, calcium or rare earth metals.

The following examples disclosed below are intended to be exemplary and are not to be construed as limiting the scope of the present invention.

## Example I

A low sodium ZSM-5 was prepared from a 25 wt. % solids forming mixture using amorphous precipitated silica as the silica source. An aluminate solution was made by dissolving 482 g of $Al_2(SO_4)_3 \cdot 14H_2O$, 640 g. of NaOH and 20 g of surfactant Daxad 27TM in 24 lb (10.9 kg) of $H_2O$. 150g of previously synthesized low Na ZSM-5 crystal in its wet cake form (33% solids) was dispersed in 1 lb (0.454 kg) of $H_2O$ and then added to the aluminate solution in a 5 gallon (8.8 l) capacity autoclave with 90 rpm agitation. 10.5 pounds (4.8 kg) of Hi-Sil (233 type) precipitated silica was mixed into the solution to form a thick slurry. Finally, 575 g of n-propylamine was added immediately prior to the sealing of the autoclave. The mixture was crystallized at 102° C (215° F), 90 rpm for about 70 hours. The filtered, washed and dried product was found to be 85% ZSM-5. The $SiO_2/Al_2O_3$ ratio of the product was 54. The crystal size of the product was determined to be in the range of 0.02-0.05 micrometres by transmission electron microscopy (TEM) and scanning electron microscopy (SEM).

## Example II

A low sodium ZSM-5 was prepared from a 25 wt. % solids forming mixture utilizing amorphous precipitated silica as the silica source. An aluminate solution was made by dissolving 723 g of $Al_2(SO_4)_3 \cdot 14H_2O$, 737 g. of NaOH and 20 g of Daxad 27TM in 25 lbs (11.3 kg) of water. 150g of previously synthesized low sodium ZSM-5 crystal in its wet cake form (33% solids) was added to the aluminate solution in a 5 gallon (8.8 l) capacity autoclave and agitated at 90 rpm. Finally, the addition of 10.5 lb (4.8 kg) of Hi-SilTM (233 type) precipitated silica and 575 g of n-propylamine were completed, forming a thick paste-like mixture. The autoclave was then sealed. The crystallization was carried out at 102° C (215° F) and 90 rpm agitation. The crystallization of the mixture was completed in less than 55 hours. The filtered, washed and dried product was 85% ZSM-5 and found to have a $SiO_2/Al_2O_3$ ratio of about 40:1. The crystal size ranged from about 0.02-0.05 micrometres.

## Example III

A low sodium ZSM-5 having a high silica to alumina ratio was prepared from a 25 wt. % solids forming mixture using amorphous precipitated silica as the silica source. A caustic solution was made by dissolving 510 g of NaOH and 20 g of Daxad 27TM in 25 lb (11.3 kg) of $H_2O$. 10.5 lb (4.8 kg) of Hi-SilTM (233 type) precipitated silica was added to the solution as well as 1150 g of n-propylamine. The whole mixture was stirred one hour at 250 rpm in a 5 gallon (8.8 l) autoclave at room temperature. The crystallization was carried out at 102° C (215° F), and 90 rpm for 70 hours. The filtered, washed and dried product was found to be 80% ZSM-5 and to have a $SiO_2/Al_2O_3$ ratio of 235. The crystal size ranged from about 0.02-0.05 micrometres.

## Example IV

A low sodium ZSM-5 was prepared from a 25 wt. % solids forming mixture using amorphous precipitated silica as the silica source. An aluminate solution was made by dissolving 482 g of $Al_2(SO_4)_3 \cdot 14H_2O$, 440 g of NaOH, and 353 g of tetramethyl ammonium chloride (50% solution) in 22 lb (10 kg) of water. The aluminate was charged into a stirred 5 gallon (8.8 l) autoclave. Ten and one-half pounds (4.8 kg) of Hi-Sil™ (233 type) precipitated silica were added to the solution resulting in a thick paste. 575 g of n-propylamine was then added and the entire mixture was whipped for 2 hours at room temperature at 250 rpm agitation. The crystallization was carried out at 160° C (320° F), 90 rpm for 6 days.

The filtered, washed and dried product was found to be 75% ZSM-5. The product was 0.2-0.5 micrometres in crystal size. The $SiO_2/Al_2O_3$ ratio of the product was 63.

Example V

A low sodium ZSM-5 was prepared from a 25 wt. % solids forming mixture using amorphous precipitated silica as the silica source. An aluminate solution was made by dissolving 482 g of $Al_2(SO_4)_3 \cdot 14H_2O$, 640 g NaOH in 22 lb (10 kg) of $H_2O$. One hundred fifty grams of previously synthesized low Na ZSM-5 crystal in its wet cake form (33% solids) was dispersed in 3 lb (1.4 kg) of $H_2O$, with 20 g of Daxad 27™ as a surfactant. The aluminate solution was charged into a stirred 5 gallon (8.8 l) capacity autoclave. The seed solution, 575 g of n-propylamine and 10.5 lb (4.8 kg) of Hi-Sil™ (210 type) precipitated silica were all added to the autoclave sequentially. The mixture was then whipped at 250 rpm at room temperature for 2 hours. The thick and uniform mixture was crystallized at 102° C (215° F), 90 rpm stirring for about 46 hours. The filtered, washed and dried product was found to be 75% ZSM-5. The $SiO_2/Al_2O_3$ ratio of the product was 63. The crystal size of the product was in the range of 0.02-0.05 micrometres.

Example VI

ZSM-5 was prepared from a 25 wt. % solids forming mixture using amorphous precipitated silica as the silica source. A precursor mixture of 120 g of $Al_2(SO_4)_3 \cdot 14H_2O$, 160 g of NaOH, 27.4 g n-propylamine, 227 g of Hi-Sil™ 233, and 900 g of water was heated in a closed container at 100° C (212° F) for 4 hours. An aluminate solution was made by dissolving 362 g of $Al_2(SO_4)_3 \cdot 14H_2O$, 480 g of NaOH and 20 g of Daxad 27™ in 23 lb (10.4 kg) of water. The aluminate solution was charged into a stirred 5 gallon autoclave. Ten pounds (4.5 kg) of Hi-Sil™ 233, 575 g of n-propylamine and the above prepared precursor were added to the autoclave sequentially. The mixture was crystallized at 102° C (215° F), 90 rpm for 7 days. The filtered, washed and dried product was 80% ZSM-5. The crystal size of the product ranged from 0.02-0.05 micrometres.

Example VII

ZSM-5 was prepared from a 25 wt. % solids forming mixture using amorphous precipitated silica as the silica source. 11 parts of aluminum sulfate, 16.3 parts of sodium hydroxide and 1 part of Daxad 27™ were dissolved in 279 parts of $H_2O$. The resultant solution had a specific gravity of 1.068 g/l. The aluminate solution was charged into an autoclave. 1 part of ZSM-5 seeds in dispersed wet cake form, 115 parts of Hi-Sil™ 233, 14 parts of n-propylamine and 5 parts of NaCl were then added sequentially. The agitator of the autoclave was set at proper speed to facilitate the mixing during the whole charging process. Crystallization was carried out at 102° C (215° F), for 60 hours with good mixing. The filtered, washed and dried product was found to be ZSM-5 of 60 ± 3 $SiO_2/Al_2O_3$ ratio. Crystal size ranged from 0.02-0.05 micrometres

Examples VIII to X

Examples VIII to X were prepared in accordance with the formulation conditions specified in Table 1. Properties of the resulting zeolite materials are specified therein. Examples VIII and IX are examples of the low sodium synthesis method of the present invention. Example X is an example of low sodium ZSM-5 synthesis employing conventional sodium silicate as the silica source. These examples demonstrate the lower crystallization times and smaller zeolite crystal size provided by the present invention in comparison with conventional preparation techniques.

## TABLE 1

### COMPARISON OF HIGH YIELD LOW SODIUM ZSM-5 SYNTHESES USING PRECIPITATED AMORPHOUS SILICA OR SODIUM SILICATE AS SILICA SOURCES

| Example | VIII | IX | XIX |
|---|---|---|---|
| Silica Source | Hi-Sil | Hi-Sil | Q-Brand |
| Type of ZSM-5 | Low Na | Low Na | Low Na |
| Solids of Reaction (%) | 25 | 25 | 10 |
| Formulation: | | | |
| Hi-Sil, g. | 4767 | 4767 | - |
| Q-Brand,* g. | - | - | 6878** |
| Daxad, g. | 20 | 20 | 20** |
| $Al_2(SO_4)_3 x H_2O$, g. | 482 | 482 | 700** |
| NaOH , g. | 704 | 640 | - |
| NaCl , g. | - | - | 1289** |
| $H_2O$ , g. | 10900 | 11400 | 8066** |
| Propylamine, g. | 575 | 575 | 765** |
| Seeding, % | 1 | .1 | - |
| Crystallization Policy | | | |
| First Stage | | | |
| Temp, °C. | 102 | 102 | 104 |
| Time, Hr. | 98 | 70 | 124 |
| Agitation, RPM | 90 | 90 | 90 |
| Second Stage | | | |
| Temp., °C. | 160 | 160 | 160 |
| Time, Hr. | 3 | 6 | 1 |
| Agitation, RPM | 90 | 90 | 90 |
| Product Property | | | |
| X-ray Crystallinity, % | 85 | 80 | 90 |
| Crystal Size, micrometres | 0 0.02-0.05 | 0.02-0.05 | 0.1 |

\* Sodium silicate
\*\* Scaled down from a 30 gallon (114 1) preparation.

## Claims

1. A method for preparing siliceous porous crystalline zeolites which comprises preparing an aqueous forming mixture substantially free of alkylhalides containing sources of silica, alkali metal cations and organic nitrogen cations, utilizing as a source of at least a portion of the organic nitrogen cations an amine selected from

    i) monoamines of the formula $R_1R_2R_3N$ wherein $R_1$ is lower alkyl of 2 to 8 carbon atoms and $R_2$ and $R_3$ are each hydrogen or lower alkyl of 2 to 8 carbon atoms; or
    ii) alkyl diamines wherein the alkyl group contains from 2 to 20 carbon atoms;
    said mixture being maintained under crystallization conditions to form siliceous zeolite crystals having an $SiO_2/Al_2O_3$ molar ratio of at least 12 and a Constraint Index of 1 to 12, characterized by utilizing as a silica Source an amorphous precipitated silica to thereby provide a non-gelling forming mixture having a solids content greater than 15 percent by weight.

2. A method according to claim 1 wherein amorphous precipitated silica ranging from 0.01 to 100

EP 0 130 809 B1

micrometres in particle size is used as a source of silica and the solids content of the forming mixture ranges from 15 weight percent to 40 weight percent.

3. A method according to claim 1 or claim 2 wherein the source of the organic nitrogen cations is selected from n-propylamine and hexamethylene diamine.

4. A method according to any of claims 1 to 3 wherein the source of alkali metal cations is sodium hydroxide.

5. A method according to any of claims 1 to 4 wherein the pH of the forming mixture, or silica-containing portion thereof, is maintained at a value less than 10.

6. A method according to any of claims 1 to 5 wherein the forming mixture contains a source of alumina.

7. A method according to claim 6 wherein a premixture is formed by combining the source of alumina with the source of alkali metal cations and wherein this premixture is thereafter combined with the source of silica.

## Revendications

1. Un procédé pour préparer des zéolites cristallines poreuses siliceuses, qui consiste à préparer un mélange générateur aqueux pratiquement exempt d'halogénures d'alkyle, contenant des sources de silice, des cations de métaux alcalins et des cations azotés organiques, en utilisant comme source d'au moins une partie des cations azotés organiques une amine choisie parmi:
   i) les mono-amines de formule $R_1R_2R_3N$ où $R_1$ est un radical alkyle inférieur ayant de 2 à 8 atomes de carbone et $R_2$ et $R_3$ sont chacun un atome d'hydrogène ou un radical alkyle inférieur ayant de 2 à 8 atomes de carbone, ou
   ii) les alkyldiamines dans lesquelles le groupe alkyle contient de 2 à 20 atomes de carbone;
   ce mélange étant maintenu dans les conditions de cristallisation pour former des cristaux de zéolite siliceuse ayant une proportion molaire $SiO_2/Al_2O_3$ d'au moins 12 et un indice de contrainte de 1 à 12, caractérisé en ce qu'il consiste à utiliser comme source de silice une silice précipitée amorphe de façon à obtenir un mélange générateur non gélifiant ayant une teneur en extraits secs supérieure à 15% en poids.

2. Un procédé selon la revendication 1, dans lequel on utilise comme source de silice une silice précipitée amorphe ayant une granulométrie de 0,01 à 100 $\mu m$, la teneur en extraits secs du mélangeur générateur étant comprise entre 15 et 40% en poids.

3. Un procédé selon la revendication 1 ou 2, dans lequel la source des cations azotés organiques est choisie entre la n-propylamine et l'hexaméthylènediamine.

4. Un procédé selon l'une quelconque des revendications 1 à 3, dans lequel la source de cations de métaux alcalins est l'hydroxyde de sodium.

5. Un procédé selon l'une quelconque des revendications 1 à 4, dans lequel le pH du mélange générateur, ou une partie de ce dernier contenant de la silice, est maintenu à une valeur inférieure à 10.

6. Un procédé selon l'une quelconque des revendications 1 à 5, dans lequel le mélange générateur contient une source d'alumine.

7. Un procédé selon la revendication 6, dans lequel on forme un prémélange en combinant la source d'alumine avec la source de cations de métaux alcalins, et dans lequel ce prémélange est ensuite combiné avec la source de silice.

## Patentansprüche

1. Verfahren zur Herstellung kieselsäurehaltiger poröser kristalliner Zeolithe, welches die Herstellung einer wässrigen Formierungsmischung umfaßt, die im wesentlichen frei von Alkylhalogeniden ist, Quellen von Siliciumdioxid, Alkalimetallkationen und organische Stickstoffkationen enthält, wobei als Quelle von zumindest einem Teil der organischen Stickstoffkationen ein Amin verwendet wird, das aus

(i) Monoaminen der Formel $R_1R_2R_3N$, worin $R_1$ eine niedere Alkylgruppe von 2 bis 8 Kohlenstoffatomen ist, und $R_2$ und $R_3$ jeweils Wasserstoff oder eine niedere Alkylgruppe von 2 bis 8 Kohlenstoffatomen sind, oder

(ii) Alkyldiaminen ausgewählt ist, worin die Alkylgruppe von 2 bis 20 Kohlenstoffatome enthält,

wobei die Mischung bei Kristallisationsbedingungen gehalten wird, um kieselsäurehaltige Zeolithkristalle mit einem $SiO_2/Al_2O_3$-Molverhältnis von mindestens 12 und einem Zwangsindex von 1 bis 12 zu bilden,

gekennzeichnet durch die Verwendung eines amorphen ausgefällten Siliciumdioxids als Siliciumdioxidquelle, um dadurch eine nicht gelierende Formierungsmischung zu schaffen, die einen Feststoffgehalt von mehr als 15 Gew.-% aufweist.

2. Verfahren nach Anspruch 1, worin ein amorphes ausgefälltes Siliciumdioxid mit einer Partikelgröße im Bereich von 0,01 bis 1000 $\mu$m als Siliciumdioxidquelle verwendet wird, und der Feststoffgehalt der Formierungsmischung im Bereich von 15 bis 40 Gew.-% liegt.

3. Verfahren nach Anspruch 1 oder 2, worin die Quelle der organischen Stickstoffkationen aus n-Propylamin und Hexamethylendiamin ausgewählt ist.

4. Verfahren nach einem der Ansprüche 1 bis 3, worin die Quelle der Alkalimetallkationen Natriumhydroxid ist.

5. Verfahren nach einem der Ansprüche 1 bis 4, worin der pH-Wert der Formierungsmischung oder des Siliciumdioxid enthaltenden Anteils davon bei einem Wert von weniger als 10 gehalten wird.

6. Verfahren nach einem der Ansprüche 1 bis 5, worin die Formierungsmischung eine Aluminiumoxidquelle enthält.

7. Verfahren nach Anspruch 6, worin eine Vormischung hergestellt wird, indem die Aluminiumoxidquelle mit der Quelle der Alkalimetallkationen kombiniert wird, und worin diese Vormischung danach mit der Siliciumdioxidquelle kombiniert wird.